**Europäisches Patentamt**

(19) **European Patent Office**

**Office européen des brevets**

(11) Numéro de publication: **0 287 443**

**B1**

(12) **FASCICULE DE BREVET EUROPEEN**

(45) Date de publication du fascicule du brevet: **06.02.91**

(51) Int. Cl.⁵: **G 01 H 11/08, H 04 R 1/44**

(21) Numéro de dépôt: **88400855.8**

(22) Date de dépôt: **08.04.88**

(54) **Procédé de compensation d'un circuit à amplificateur de charge, notamment pour hydrophone piézoélectrique.**

(30) Priorité: **14.04.87 FR 8705266**

(43) Date de publication de la demande:
**19.10.88 Bulletin 88/42**

(45) Mention de la délivrance du brevet:
**06.02.91 Bulletin 91/06**

(84) Etats contractants désignés:
**DE ES GB IT NL**

(56) Documents cités:
**FR-A-2 314 506**
**US-A-4 451 710**

**IEEE TRANSACTIONS ON SONICS AND ULTRASONICS, vol. SU-29, no. 6, novembre 1982, pages 370-377, IEEE, New York, US; G.R. HARRIS: "Sensitivity considerations for PVDF hydrophones using the spot-poled membrane design"**

(73) Titulaire: **THOMSON-CSF**
**51, Esplanade du Général de Gaulle**
**F-92800 Puteaux (FR)**

(72) Inventeur: **Billet, Daniel**
**THOMSON-CSF SCPI 19, avenue de Messine**
**F-75008 Paris (FR)**

(74) Mandataire: **Desperrier, Jean-Louis et al**
**THOMSON-CSF SCPI**
**F-92045 PARIS LA DEFENSE CEDEX 67 (FR)**

Courier Press, Leamington Spa, England.

## Description

La présente invention se rapporte aux procédés de compensation des circuits à amplificateur de charge. Elle est particulièrement adaptée aux circuits utilisés pour amplifier les signaux des hydrophones piézoélectriques, notamment de ceux utilisant un matériau en polymère piézoélectrique.

Il est connu de fabriquer des antennes acoustiques avec des capteurs piézoélectriques dont le matériau est un polymère ou copolymère piézoélectrique tel que le PVF 2.

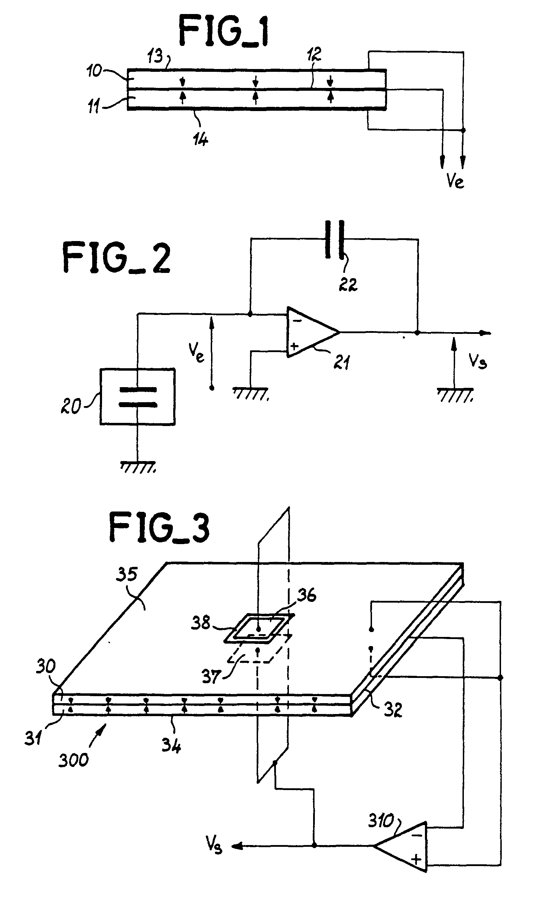

On a représenté sur la figure 1 une vue en coupe de la structure généralement uitlisée pour un tel capteur.

Celui-ci comporte deux couches de polymère 10 et 11 séparées par une couche conductrice 12 formant électrode. Ces deux couches sont polarisées dans la direction de leur épaisseur et dans des sens opposés. Elles sont revêtues sur leur face extérieure par des électrodes conductrices 13 et 14. Le signal électrique de sortie Ve est pris entre l'électrode centrale et ces deux électrodes externes qui sont reliées ensemble.

Chacun de ces capteurs, dits surfaciques, peut se présenter sous la forme d'un rectangle de dimensions notables, pouvant dépasser la centaine de centimètres carrés.

On sait réunir ces capteurs en parallèle pour constituer une antenne acoustique plane de grandes dimensions.

En raison de leur souplesse, on sait aussi leur donner d'autres formes, par exemple une forme cylindrique en les plaçant à l'intérieur ou à l'extérieur d'un cylindre isolant.

Pour amplifier le signal de sortie Ve du capteur, on utilise couramment un amplificateur de charge dont le schéma est représenté en figure 2.

Le capteur 20 est connecté par l'une de ses électrodes à l'entrée d'un amplificateur différentiel 21 à très grand gain et à très grande impédance d'entrée. Ce genre d'amplificateur, connu sous le nom d'amplificateur opérationnel, est tout à fait courant. L'entrée+de cet amplificateur est connectée à la masse, comme l'autre électrode du capteur.

La sortie de l'amplificateur 21 est reliée à son entrée − par l'intermédiaire d'un condensateur de contre-réaction 22 de capacité Cr.

Au point de vue électrique, le capteur 20 est un condensateur de capacité $C_h$. Le signal de sortie $V_s$ est donc donné par:

$$V_s = -\frac{C_h - C_r}{C_r} V_e$$

En raison des dimensions du capteur, la capacité $C_h$ est relativement importante, et en choisissant alors une valeur de $C_r$ très petite par rapport à $C_h$, l'amplification du montage est sensiblement égale à:

$$\frac{V_s}{V_e} = -\frac{C_h}{C_r}$$

Le capteur 20 ne réagit pas seulement aux signaux acoustiques qu'il reçoit en délivrant un signal $V_e$ variable, mais il est également sensible à plusieurs paramètres extérieurs, notamment la pression hydrostatique et la température, qui font varier la capacité $C_h$. Ceci fait varier de manière importante, tant en amplitude qu'en phase, la fonction de transfert $V_s/V_e$, d'où une incertitude importante sur les mesures. Cet inconvénient est particulièrement notable dans le cas des antennes acoustiques montées sur des véhicules dont l'immersion change, tels que les sous-marins ou les sonars remorqués.

Pour remédier à cet inconvénient, l'invention propose de remplacer la capacité 22 par une petite portion du capteur 20 lui-même, ce qui compensera automatiquement l'action des facteurs extérieurs.

D'autres particularités et avantages de l'invention apparaîtront clairement dans la description suivante présentée à titre d'exemple non limitatif en regard des figures annexées qui représentent:

la figure 1, une vue en coupe d'un capteur piézoélectrique;

la figure 2, un schéma d'un amplificateur de charge pour un tel capteur;

la figure 3, un schéma d'un amplificateur de charge muni d'un capteur modifié selon l'invention;

la figure 4, une vue en coupe du capteur 30 de la figure 3; et

la figure 5, une vue d'un capteur selon l'invention, de forme cylindrique.

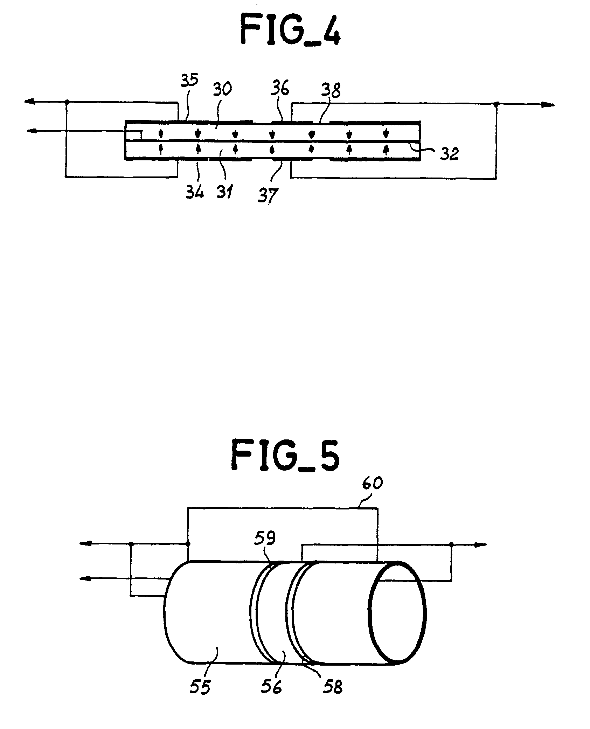

On a représenté sur la figure 3 un capteur 300 modifiée selon l'invention et connecté à un amplificateur de charge 310, et sur la figure 4 une coupe de ce capteur.

Ce capteur 300 comprend, comme sur la figure 1, deux couches piézoélectriques 30 et 31 polarisées en sens inverses, une électrode centrale 32 et deux électrodes externes 34 et 35.

Les électrodes externes sont reliées en parallèle à l'entrée + de l'amplificateur 310, et l'électrode centrale à l'entrée −.

Pour former le condensateur de contre-réaction, on découpe les électrodes externes pour former deux petites portions 36 et 37 isolées du reste de l'électrode, identiques et situées vis-à-vis l'une de l'autre. Sur la figure la découpe 38 qui forme la portion 36 à la forme d'un carré, mais elle peut être quelconque, par exemple circulaire.

Chacune de ces portions forme avec l'électrode centrale un petit condensateur dont le comportement vis-à-vis des paramètres extérieurs est le même que celui du grand condensateur formé par le reste de l'électrode et l'électrode centrale. Pour assurer encore mieux l'identité de ces comportements, il est préférable de placer les portions 36 et 37 au centre du capteur. On peut néanmoins, pour faciliter les connexions notamment, les placer près des bords tout en gardant un fonctionnement très satisfaisant.

On obtient le condensateur de contre-réaction en reliant les deux portions 36 et 37 en parallèle à la sortie de l'amplificateur 310, l'électrode centrale étant reliée à l'entrée − comme on l'a vu plus haut. La capacité de ce condensateur est donc le double de celle des deux petits condensateurs ainsi mis en parallèle. Il en est de même pour la capacité du reste du capteur qui est aussi équivalent à deux condensateurs en parallèle. On remarque que l'électrode centrale étant commune au condensateur capteur et au condensateur de contre-réaction, il est nécessaire de la relier à l'entrée − de l'amplificateur pour avoir effectivement une contre-réaction. En effet, selon les conventions habituelles, le gain de l'amplificateur est positif pour l'entrée + et négatif pour l'entrée −.

De cette manière le condensateur de contre-réaction a le même comportement que le condensateur formé par le capteur et seules les valeurs des capacités différent, leur rapport étant égal au rapport des surfaces utilisées. On remarque d'ailleurs qu'il n'est plus alors nécessaire d'ajuster la valeur du condensateur de contre-réaction selon le capteur effectivement utilisé, dont la capacité peut varier d'un échantillon à l'autre, puisque le rapport voulu est obtenu automatiquement par construction. Il y a donc une compensation automatique quels que soient les paramètres perturbateurs appliqués au capteur, à condition, ce qui est le cas le plus fréquent, qu'ils soient uniformes sur l'étendue du capteur et non pas localisés à une partie de celui-ci. Il en résulte également une amélioration considérable de la reproductibilité des ensembles capteurs-préamplificateurs qui constituent l'antenne, puisque dans la plupart des réalisations on associe un certain nombre de capteurs munis d'un amplificateur comme sur la figure 3, cet amplificateur jouant dans ce cas le rôle d'un préamplificateur.

D'autres formes du capteur sont tout à fait réalisables et on a représenté à titre d'exemple sur la figure 5 un capteur cylindrique modifié selon l'invention et dans lequel le condensateur de contre-réaction est formé par une petite couronne 56 délimitée sur l'électrode extérieure 55 par deux découpes circulaires 58 et 59. Une connexion 60 relie les deux parties de l'électrode 55 séparées par la couronne 56. Dans cette réalisation il n'y a qu'une couche de matériau piézoélectrique et deux électrodes dont celle qui est intérieure au cylindre (mais extérieure à la couche piézoélectrique) n'est pas découpée. Le fonctionnement est cependant tout à fait semblable à celui de l'exemple précédent, et on pourrait bien entendu utiliser un cylindre à deux couches et trois électrodes.

## Revendications

1. Procédé de compensation d'un circuit à amplificateur de charge, notamment pour hydrophone piézoélectrique, ce circuit comportant un capteur comprenant au moins une couche isolante (30) recouverte de deux électrodes conductrices (32, 35) formant avec cette couche un condensateur, un amplificateur opérationnel différentiel (21) comprenant deux entrées + et − reliées respectivement aux deux électrodes, et un condensateur (22) de contre-réaction connecté entre la sortie et l'entrée − de l'amplificateur, caractérisé en ce qu'on utilise pour former le condensateur de contre-réaction au moins une petite portion (36) de l'électrode reliée à l'entrée +, cette petite portion étant isolée du reste de l'électrode et reliée à la sortie de l'amplificateur (21).

2. Procédé selon la revendication 1, caractérisé en ce que le capteur comprend deux couches isolantes (30, 31) séparées par une électrode conductrice centrale (32) et recouvertes par deux électrodes conductrices externes (34, 35) et que l'on utilise deux petites portions (36, 37) de respectivement chacune des électrodes externes, ces portions étant sensiblement identiques, situées en vis-à-vis et connectées en parallèle à la sortie de l'amplificateur.

3. Procédé selon l'une quelconque des revendications 1 et 2, caractérisé en ce que la portion d'électrode (36, 37) est située sensiblement au centre du capteur.

4. Procédé selon l'une quelconque des revendications 1 à 3, caractérisé en ce que le capteur est cylindrique (55) et que la portion d'électrode à la forme d'une couronne (56) découpée sur ce cylindre.

5. Procédé selon l'une quelconque des revendications 1 à 4, caractérisé en ce que le capteur est un hydrophone comprenant au moins une couche (30) de polymère piézoélectrique.

## Patentansprüche

1. Kompensationsverfahren für eine Ladungsverstärkerschaltung, insbesondere für ein piezoelektrisches Hydrophon, wobei diese Schaltung einen Aufnehmer enthält, der wenigstens eine Isolierschicht (30), die von zwei mit dieser Schicht einen Kondensator bildenden leitenden Elektroden (32, 35) abgedeckt ist, einen Operations-Differenzverstärker (21) mit zwei jeweils mit den zwei Elektroden verbundenen Eingängen + und − und einen Gegenkopplungskondensator (22), der mit dem Ausgang und mit dem Eingang − des Verstärkers verbunden ist, umfaßt, dadurch gekennzeichnet, daß für die Ausbildung des Gegenkopplungskondensators wenigstens ein kleiner Bereich (36) der mit dem Eingang + verbundenen Elektrode verwendet wird, wobei dieser kleine Bereich vom Rest der Elektrode isoliert ist und mit dem Ausgang des Verstärkers (21) verbunden ist.

2. Verfahren gemäß Anspruch 1, dadurch gekennzeichnet, daß der Aufnehmer zwei Isolierschichten (30, 31) umfaßt, die durch eine mittige leitende Elektrode (32) getrennt sind und von zwei äußeren leitenden Elektroden (34, 35) bedeckt sind und daß zwei kleine Bereiche (36, 37) der ersten bzw. der zweiten äußeren Elektrode verwendet werden, wobei die Bereiche im wesentlichen identisch sind, einander gegenüberliegende angeordnet sind und mit dem Ausgang des Verstärkers parallel geschaltet sind.

3. Verfahren gemäß einem der Ansprüche 1 und 2, dadurch gekennzeichnet, daß der Elektrodenbereich (36, 37) im wesentlichen im Mittelpuntk des Aufnehmers angeordnet ist.

4. Verfahren gemäß einem der Ansprüche 1 bis 3, dadurch gekennzeichnet, daß der Aufnehmer zylindrisch ist (55) und daß der Elektrodenbereich die Form eines aus dem Zylinder geschnittenen Kranzes (56) besitzt.

5. Verfahren gemäß einem der Ansprüche 1 bis 4, dadurch gekennzeichnet, daß der Aufnehmer ein Hydrophon ist, das wenigstens eine Schicht (30) aus einem piezoelektrischen Polymer umfaßt.

**Claims**

1. A method of compensating a charge amplifier circuit, more particularly for a piezoelectric hydrophone, said circuit comprising a pickup comprising at least one insulating layer (30) covered by two conducting elements (32 and 35) forming a capacitor with the said layer, a differential operational amplifier (21) comprising two inputs + and − connected respectively with the two electrodes, and a negative feedback capacitor (27) connected between the output and the input − of the amplifier, characterized in that the negative feedback capacitor is formed by at least one small portion (36) of the electrode connected with the + input, this small portion being insulated from the remainder of the electrode and connected with the output of the amplifier (21).

2. The method as claimed in Claim 1, characterized in that the pickup comprises two insulating layers (30 and 31) separated by a central conducting electrode (32) and covered by two external conducting electrodes (34 and 35) and in that two small portions (36 and 37) of each of the external electrodes respectively are used, these portions being substantially identical, situated opposite to each other and connected in parallel to the output of the amplifier.

3. The method as claimed in Claim 1 or Claim 2, characterized in that the electrode portion (36 and 37) is situated substantially in the center of the pickup.

4. The method as claimed in any one of the preceding Claims 1 through 3, characterized in that the pickup is cylindrical (55) and in that the electrode portion has the form of a ring (56) made by cutting into the cylinder.

5. The method as claimed in any one of the preceding Claims 1 through 4, characterized in that the pickup is a hydrophone comprising at least one layer (30) of piezoelectric polymer.

# FIG_1

# FIG_2

# FIG_3

# FIG_4

35  30  36  38

34  31  37

32

# FIG_5

60

59

55  56  58